# EUROPEAN PATENT APPLICATION

(11) **EP 4 744 497 A1**
(43) Date of publication of application: **20.05.2026**
(21) Application number: 24213842.8
(22) Date of filing: 19.11.2024
(51) Int. Cl.: A23D 9/013, C11C 3/02, C11C 3/06

(54) **IMPROVED METHOD FOR THE PRODUCTION OF A MONOGLYCERIDE WITH REDUCED MCPD CONTENT**

(71) Applicant: BASF SE, 67056 Ludwigshafen am Rhein (DE)
(72) Inventor: The designation of the inventor has not yet been filed
(74) Representative: BASF IP Association

(57) **Abstract**

The present invention is related to an improved method for the production of a monoglyceride with reduced MCPD content which comprises the following subsequent steps: i) glycerol is mixed with at least one base and at least one triglyceride and/or at least one fatty acid, ii) the resulting mixture is heated up to a temperature in the range of from 200 to 300 °C and held in said range for 1 to 180 minutes to form at least one monoglyceride, iii) a first portion of at least one acid is added to the heated-up mixture, iv) the mixture is cooled down to a temperature in the range of from 20 to 170 °C, if applicable, any excess glycerol is separated out using phase separation, and v) a second portion of at least one acid is added to the cooled-down mixture to completely neutralize the at least one base. The present invention is also directed to a monoglyceride producible with said method as well to the use of said monoglyceride for the production of formulations used in food, pharmaceutical or animal nutrition.

## Description

### Technical Field

The present invention is related to an improved method for the production of a monoglyceride with reduced MCPD (3- and 2-chloropropane-1,2-diol) content as well as to a monoglyceride producible with said method and its use for the production of a nutritional formulation.

### Introduction

Monoglycerides, i.e. monoesters of glycerol with fatty acids, are used as emulsifier in food, feed and pharma formulations. Monoglycerides can also be used to create other nutritional emulsifiers such as acetic, tartaric, diacetyltartaric, citric or lactic acid ester of monoglycerides.

3-MCPD (3-chloropropane-1,2-diol) and its isomer 2-MCPD (2-chloropropane-1,2-diol) (herein together referred to as "MCPD") are contaminants which can be formed by reaction between a source of chlorine and a lipid, especially at the very high reaction temperatures used for monoglyceride production (around 250 °C). Around 10 to 20 % of the total MCPD that is created will be present as 2-MCPD. MCPD is a carcinogenic substance that should be minimized in all foods. Regulatory limits will be set for food emulsifiers in, both, adult and especially infant applications. Therefore, there is a need to control MCPD formation.

The free MCPD molecule itself can be removed with distillation because it has much lower boiling point than monoglyceride however, when forming mono- and diglycerides the MCPD molecule will mostly be formed as an ester with one or two fatty acid chains, so called MCPD ester. The MCPD monoester will have slightly lower boiling point than monoglycerides (429 °C vs. 441 °C respectively) and the MCPD diester will have significantly higher boiling point therefore, they cannot be removed without also removing the monoglyceride. Therefore, once MCPD ester is created, it was - until now - almost impossible to remove it from mono- and diglycerides without strongly impacting product composition. MCPD and its esters are chemically stable and cannot be broken down, without destroying the monoglyceride as well. Furthermore, the MCPD present in the raw material is present as MCPD ester. Therefore, reducing the MCPD below the level of the raw material was not considered possible.

This means that formation of MCPD must be prevented in the production process or controlled so that mostly the free MCPD molecule is created with minimal amount of MCPD esters forming. Currently, the only way to prevent MCPD formation is to eliminate all sources of chlorine in all raw materials used or, alternatively, to keep temperature low during whole processing, as the formation reaction only occurs at high temperature (cf. F. Destaillats et al.: "Formation mechanisms of monochloropropanediol (MCPD) fatty acid diesters in refined palm (elaeis guineensis) oil and related fractions", Food Additives & Contaminants, Vol. 1, 2012, p. 29-37).

However, firstly, monoglyceride production must be performed at very high temperature (around 250 °C) and, secondly, chlorine is naturally present in raw materials as organic chlorine compounds (cf. Destaillats et al., ibid.). Only if the chlorine is not bound in organic chlorine compounds, can it be washed out of the oil by water washing. Therefore, removing all "artificial" chlorine contamination will not eliminate all sources of chlorine because the naturally present organic chlorine compounds will still be present. Such bound chlorine can be set free at elevated temperature (at 120 °C and above) where it can then, take part in the formation of MCPD (cf. Destaillats et al., ibid.). Currently known methods of reducing MCPD in mono- and diglycerides and their derivatives are, thus, not capable of reaching the very low values expected for nutritional applications, especially for infant nutrition, especially when the raw material has high chlorine content.

Furthermore, there is a very large batch to batch variation between batches of the same raw material type and even from the same manufacturer. Therefore, one often has surprisingly high or low MCPD values between production batches even using same raw material type, but different raw material batches, delivered from the same supplier. This is most likely caused by fluctuations in chlorine content both free chlorine and organic chlorine compounds in the raw material. Therefore, when comparing production methods to reduce MCPD one always needs to compare the methods using the same raw material batch. Food production requires stability and standardized product, and it is unacceptable to have highly varied amounts of contaminants in the end products especially if the values can suddenly be higher than the regulatory limit. Products with high contaminants must be disposed, resulting in high costs and in extreme case, high contaminant concentration can lead to recalls of products leading to even stronger negative impact to the business and the customers.

Therefore, it has been the problem underlying the present invention to provide an improved method to produce a monoglyceride with reduced MCPD content, preferably being even lower than the one of the raw material used, wherein, preferably, the reduced MCPD content has no impact on the properties and the quality of the monoglyceride as well as of the nutritional formulations the monoglyceride is used for.

### Invention

The problem was solved by a method for the production of a monoglyceride, wherein the method comprises the following subsequent steps:
i) glycerol is mixed with at least one base and at least one triglyceride and/or at least one fatty acid,
ii) the resulting mixture is heated up to a temperature in the range of from 200 to 300 °C and held in said range for 1 to 180 minutes to form at least one monoglyceride,
iii) a first portion of at least one acid is added to the heated-up mixture,
iv) the mixture is cooled down to a temperature in the range of from 20 to 170 °C, if applicable, any excess glycerol that separates out is removed by phase separation, and
v) a second portion of at least one acid is added to the cooled-down mixture to completely neutralize the at least one base.

Surprisingly, it was found that by adding the at least one acid in two portions - a first portion to the heated-up mixture in step iii) and a second portion to the cooled-down mixture in step v) - the free MCPD content of the produced monoglyceride was significantly lower, especially after phase separation and/or distillation, compared to adding the full amount of acid to the heated-up mixture.

The end product, i.e. the monoglyceride, obtained with the inventive method preferably has the same composition as one obtained with the previous one-step acid addition method because, preferably, the same amount of acid is added to the mixture. Therefore, when the product obtained by the inventive method is used the product should perform the same and it should not have different impacts on, for example, pH value.

### Definitions:

As for the present invention, the term "MCPD" or "chloropropane-1,2-diol" shall mean 2- and/or 3-chloropropane-1,2-diol in its free form, but can also mean at least one mono- and/or diester of 2- and/or 3-chloropropane-1 ,2-diol with at least one fatty acid. Around 10 to 20 % of the total MCPD that is created will be present as 2-MCPD. To increase clarity, the term "free MCPD" will be used for the molecule/s without fatty acid esters and the term "MCPD esters" for the molecule/s without the free form.

As for the present invention, "a first portion of at least one acid" in step iii) also comprises that only a minor amount of less than 10 % or even less than 5 % of the total acid added in steps iii) and v) or even no acid at all is added in step iii), i.e. to the heated-up mixture. In case of the latter, step iii) would be obsolete. However it is clearly preferred that, in step iii), at least 10 % of the total acid is added.

Accordingly, "a second portion of at least one acid" in step v) also comprises that a major amount of more than 90 % or even more than 95 % of the total acid added in steps iii) and v) or the entire amount of acid is added in step v), i.e. to the cooled-down mixture. However, it is clearly preferred that, in step v) not more than 90 % of the total acid is added.

As for the present invention, the term "thin film evaporation" also called wiped film evaporator consists of a heated cylinder and rotating blades inside the cylinder. The fluid to evaporate is fed to the top of the cylinder and the rotating blades make a thin film on the inside of the heated cylinder. This ensures a high surface area, high heat flux and thus rapid evaporation. The blades can have various construction, but their purpose is to keep the product film on the cylinder thin, so heat transfer is as high as possible. To allow evaporation at even lower temperature the inside of the cylinder is kept at very low pressure to lower the evaporation temperature. The distillate then exits the cylinder and is condensed in a separate column where the surface is cool enough to allow fast condensation and surface area is usually high to increase condensation capacity and efficiency.

As for the present invention, the term "thin film evaporation" also encompasses so-called falling film evaporation which is the same construction as thin film evaporation as described above but rotating blades are not present resulting in an uneven film and slower transfer of energy. These setups are less efficient but are simpler construct, but it works in a similar manner and can be used instead of thin film evaporator if needed.

As for the present invention, the term "short path distillation" shall mean a variation of thin film evaporation as described above where the condenser is placed inside the thin film evaporator column, this ensures that the distillate has a very "short path" to travel before being condensed. More importantly this allows the pressure to be even lower because the distillate takes up allot of volume in its gaseous state therefore condensing it quickly allows for lower and more stable pressure. Because the pressure is more stable and the inside of the column itself is not "fighting" against the pressure pumps it is now possible to install additional ultra vacuum pumps which allow a much lower pressure. This would not be feasible on a regular thin film evaporation due to the large amount of volume taken up by the distillate that needs to be lead out of the column and condensed separately. Because this device can reach even lower pressures it can thus evaporate monoglycerides and thus create > 90 wt. % pure monoglyceride. During all distillation, the functionality of the device is based on the temperature and pressure together. One can lower the temperature without losing distillation capacity if the pressure is reduced to compensate for the lower temperature and vice versa.

Both, thin film evaporation and short path distillation can be used to remove glycerol from the monoglyceride phase if the temperature and pressure is right. However, only short path distillation can be used to distill the monoglyceride because of the much higher boiling point of the monoglyceride e.g. monostearate (441 °C at 1.0325 bar) versus the glycerol (279 °C at 1.0325 bar). Furthermore, both distillation techniques can be used to remove free MCPD if conditions are correctly controlled.

In fact one can use any distillation techniques that are capable of evaporating the intended material like glycerol, free MCPD or monoglyceride. Any technology that can shift the desired molecules from liquid to gas phase will work for this invention. For example, traditional distillation such as "pot still" which is a batch distillation where the whole batch is heated, and the distillate is condensed separately. Furthermore, fractional distillation where the distillate is evaporated and condensed over and over in long columns will also work well.

The best method to evaluate the impact of the distillation is to measure the amount of distillate. Since both temperature and pressure impact how much material is evaporated out of the mixture it is important to use the % of distillate to verify the impact of the distillation. This serves firstly to confirm that the distillation parameters were correct and reproducible. Secondly this is a way to compare impact of distillation across different distillation equipment. However, it should be noted that the sample itself impacts the amount of distillate and therefore you can only compare distillate across different distillation equipment if the same sample was used for all equipment. Therefore, distillate % is shown to quantify the impact that the distillation equipment has and to show the potential loss of each process. When the excess glycerol is being distilled out the distillate is a waste product and translates directly to losses. In most of the trials the excess glycerol is only 1-3 % therefore every % above this value is monoglyceride that is lost during distillation. This can happen if the distillation conditions are too strong. Naturally if short path distillation is being used to concentrate monoglyceride in the distillate phase the distillate is not a waste product. This should be obvious to any person with experience in distillation.

As for the present invention, the term "phase separation" shall mean the separation of two or multi-phase systems into two or more separate phases. In this invention this is a liquid-liquid phase separation of excess glycerol which is no longer soluble in the monoglyceride phase after the reaction and after cooling the mixture. The purpose of using excess glycerol is to increase the monoglyceride content and reduce the diglyceride and triglyceride content. However this results in very high amount of excess of glycerol that it is best to remove by phase separation. Interestingly using excess glycerol combined with the two-step neutralization method described herein, seemed to have led to only free MCPD formation which could then be removed during phase separation.

Preferably, the inventive method comprises the following subsequent steps:
i) glycerol is mixed with at least one base and at least one triglyceride and/or at least one fatty acid,
ii) the resulting mixture is heated up to a temperature in the range of from 200 to 300 °C and held in said range for 1 to 180 minutes to form at least one monoglyceride,
iii) a first portion of at least one acid is added to the heated-up mixture partially neutralizing the at least one base,
iv) the mixture is cooled down to a temperature in the range of from 20 to 170 °C, if applicable, any excess glycerol that separates out is removed by phase separation, and
v) a second portion of at least one acid is added to the cooled-down mixture to neutralize the rest of the at least one base.

The at least one triglyceride in step i) of the inventive method is preferably at least one vegetable oil or animal fat, more preferably at least one vegetable oil or animal fat selected from the group consisting of corn oil, sunflower oil, canola oil, palm oil, palm kernel oil, safflower oil, coconut oil, olive oil and beef tallow, and most preferably corn oil. These triglycerides can be hydrogenated, un-hydrogenated or partially hydrogenated. The fatty acids of the at least one triglyceride preferably have a chain length between 3 and 24 carbon atoms and may have carbon-carbon double bonds, i.e. be unsaturated. Alternatively, or additionally, in step i) direct esterification can be performed using free, unesterified fatty acids from all the same triglyceride sources as mentioned above in this paragraph.

Both, transesterification and direct esterification will cause the creation of MCPD if organic chlorine compounds are present. It is well known that to increase the monoglyceride content and thus decrease diglyceride and triglyceride content in the mixture after the reaction, one needs to increase the glycerol content in the mixture and thus reduce the triglycerides or fatty acids.

If further reduction of MCPD content in the end-product, i.e. in the monoglyceride, is preferred, this can be achieved by using higher amounts, i.e. an excess, of glycerol in step i). Interestingly, this only works in combination with the inventive two-step neutralization method and not with the previous one-step neutralization. It was found that MCPD values below the analytical limits (< 100 ppb) can be reached by the using an excess of glycerol. If large excess of glycerol is used, the mixture after reaction in step ii) can end up with 5 to 30 wt. % free unreacted glycerol excess in the mixture. In such case of a large excess of glycerol thus separating out physically from the mixture, the glycerol needs then, in step iv), to be separated from the mixture using phase separation. It was surprisingly found that the impact is so effective that all MCPD can be removed in the phase separation without having to conduct subsequent distillation. Thus, the glycerol content in the mixture of step i) is preferably at least 13 wt. %, more preferably at least 16 wt. %, even more preferably at least 19 wt. % and most preferably at least 22 wt. %.

The at least one base in step i) is preferably at least one inorganic base, more preferably at least one inorganic base selected from the group consisting of sodium hydroxide, sodium carbonate, sodium acetate, potassium hydroxide, potassium carbonate, calcium oxide, calcium hydroxide, magnesium oxide and lithium hydroxide, and is most preferably calcium oxide.

In step ii), the resulting mixture is preferably heated up to a temperature in the range of from 245 to 285 °C and is preferably held in said range for 5 to 90 minutes to form at least one monoglyceride.

The at least one acid in step iii) may be at least one inorganic acid and/or at least one organic acid, and preferably is at least one acid selected from the group consisting of acetic acid, lactic acid, citric acid, sulfuric acid, hydrochloric acid and phosphoric acid, and is most preferably phosphoric acid.

For sake of more accurate control of concentration, the at least one acid may be diluted in glycerol, preferably having a concentration in the range of from 10 to 60 wt. %, and most preferably of from 20 to 30 wt. %. Especially preferably, the at least one acid is phosphoric acid and is diluted in glycerol having a concentration in the latter in the range of from 20 to 30 wt. %.

In step iii), a first portion of at least one acid is added to the product mixture of the transesterification reaction or direct esterification reaction, respectively. At that, preferably, the transesterification reaction or direct esterification reaction, respectively, is at least partially, preferably almost or even completely stopped. Otherwise, the monoglyceride content would decrease while diglyceride and triglycerides will increase over time, especially at higher temperatures. This means all subsequent processing steps will degrade the product leading to less and less monoglyceride content. Thus, if only a minor amount of less than 10 % or even less than 5 % of the total acid added or even no acid at all is added in step iii), it is preferred to cool down the mixture in step iv) very quickly, i.e. with a rate of at least 30 °C/h, preferably of at least 0.5 °C/s, more preferably of at least 4 °C/s, in order to reduce or even avoid loss of monoglyceride. The rate of monoglyceride loss depends on the initial Monoglyceride content after the reaction therefore some products are more sensitive to inactivated catalysators as others.

Full neutralization would mean addition of 0.4 to 1.2 mol of acid calculated as phosphoric acid per mol of base calculated as calcium oxide. In case another acid than phosphoric acid and/or another base than calcium oxide is used, the skilled person knows how to calculate the according amount of acid needed for full neutralization in terms of acid and base equivalents. Because of the low stability of monoglyceride with active catalysator (the at least one base) it is important to stop the reaction but doing a full neutralization at the reaction temperature will lead to higher MCPD esters content in the end-product, i.e. in the monoglyceride. It was found that only partially neutralizing the mixture at the reaction temperature was enough to keep the mixture stable, during the process and this surprisingly led to significantly lower MCPD ester content in the end-product, i.e. in the monoglyceride.

The % dosage in step iii) of the at least one acid, preferably being phosphoric acid, is preferably in the range of from 0 to 50 mol %, more preferably of from 10 to 40 mol %, more preferably of from 12.5 to 35 mol %, more preferably of from 12.5 to 27.5 mol % and most preferably of from 12.5 to 17.5 mol % of the total acid added in steps iii) and v).

In step iv), the mixture is cooled down to a temperature in the range of from 20 to 170 °C, preferably of from 30 to 120 °C and more preferably of from 30 to 100 °C. If there is enough excess, i.e. unreacted glycerol present to cause phase separation, it is preferred that the mixture is cooled down to a temperature in the range of from 80 to 170 °C such that the excess glycerol is separated out by phase separation.

Preferably, after step iv), the mixture is refined to reduce color, heavy metals and/or other contaminants and/or improve filtration, using refining aids such as bleaching earth to remove color and oxidative breakdown products and/or activated carbon to remove heavy metals and color and/or amorphous silica gel to remove water soluble compounds such as salts and/or filtration aids to improve filtration, wherein the refining aids are added at 60 to 120 °C and then the dispersion is mixed for 30 to 120 minutes.

The skilled person will realize that this refining step can also be conducted after one of steps v) to vii). But then liquid-solid separation, preferably filtration, clearly needs to be performed after the refining step since it is designed to remove solids out of the mixture.

For the second dosage of acid, the at least one acid in step v) may be at least one inorganic acid and/or at least one organic acid, and preferably is at least one acid selected from the group consisting of acetic acid, lactic acid, citric acid, sulfuric acid, hydrochloric acid and phosphoric acid, and is most preferably phosphoric acid.

For the sake of more accurate control of concentration, the at least one acid may be diluted in glycerol, preferably having a concentration in the range of from 10 to 60 wt. %, and most preferably of from 20 to 30 wt. %. Especially preferably, the at least one acid is phosphoric acid and is diluted in glycerol having a concentration in the latter in the range of from 20 to 30 wt. %.

The % dosage in step v) of the at least one acid, preferably being phosphoric acid, is preferably in the range of from 50 to 100 mol %, more preferably of from 60 to 90 mol %, more preferably of from 65 to 87.5 mol %, more preferably of from 72.5 to 87.5 mol % and most preferably of from 82.5 to 87.5 mol % of the total acid added in steps iii) and v). Preferably, in steps iii) and v) the same at least one acid is used, more preferably in both steps phosphoric acid is added, even more preferably phosphoric acid diluted in glycerol, even more preferably having a concentration in the latter in the range of from 10 to 60 wt. %, and most preferably of from 20 to 30 wt. %.

The molar ratio of the total amount of acid added in steps iii) and v), preferably being phosphoric acid, and the at least one base added in step i), preferably being calcium oxide, is preferably in the range of from 0.4 to 1.5, more preferably of from 0.5 to 1.2 and most preferably of from 0.6 to 1.1 calculated as phosphoric acid to calcium oxide. If another acid than phosphoric acid and/or another base than calcium oxide is used, the skilled person knows how to calculate the molar ratio in terms of acid and base equivalents.

Optionally and preferably, the mixture is, especially preferably after step v), subjected to at least one liquid-solid separation step, preferably being at least one filtration step, more preferably at least one filtration with 0.1 to 100 µm pore size filter. The goal is to remove insoluble solids, in particular insoluble salts formed by the reaction of the at least one acid added in steps iii) and v) and the at least one base added in step i). The insoluble solids may also comprise the refining aids.

Preferably, in a step vi), the mixture is subjected to a distillation at a temperature in the range of from 150 to 230 °C, preferably of from 165 to 210 °C, more preferably of from 165 to 185 °C, and a pressure in the range of from 0.1 to 5.0 mbar, preferably of from 0.1 to 3.0 mbar, especially preferably of from 0.3 to 0.7 mbar, to distill off unreacted glycerol and free MCPD. MCPD esters cannot be removed by distillation without losing substantial amount of monoglyceride into the distillate. Furthermore, this will only work on MCPD monoesters while MCPD diesters will always remain. Said distillation in step vi) can be a thin film distillation, short path distillation or any distillation that serves to remove unreacted glycerol and free MCPD. The distillation conditions must be controlled so that the monoglyceride is not evaporated while the glycerol and MCPD is distilled off. The control is achieved by adjusting either the pressure or temperature to result in removal of unwanted substance by evaporation. MCPD esters, however, cannot be significantly lowered using distillation because the boiling point of the esters is either similar or higher than the monoglyceride thus preventing any removal, unless distillation conditions are selected (higher temperature and lower pressure) where large amount of monoglyceride is removed by distillation, the MCPD monoester will then also be removed by this action. Since the monoglyceride is the end-product this method is not economically viable and without changing the neutralization it will not result in substantial lowering of MCPD.

Preferably, the at least one monoglyceride obtained in step vi) is subjected, in a step vii), to a short path distillation, i.e. distilled off, to collect concentrated monoglyceride with at least 90 wt. % purity. Said short path distillation is conducted at a temperature in the range of from 170 to 230 °C, preferably of from 180 to 230 °C, more preferably of from 180 to 210 °C, and most preferably of from 180 to 200 °C and at a pressure in the range of from 0.005 to 0.5 mbar, preferably of from 0.01 to 0.1 mbar, and most preferably of from 0.03 to 0.07 mbar.

Alternatively, said step vii) can be conducted subsequent to step v), i.e. with the at least one monoglyceride obtained in step v), and prior to step vi) or even subsequent to step v) without conducting step vi) and without having to change any of the preferred parameters for step vii) as described above.

Optionally, the at least one monoglyceride obtained in step v), vi) or vii), respectively, can be subjected to winterization, wherein "winterization" refers to the process of removing any materials that will crystallize at either room temperature or during cooled storage at 5 °C. In this system the winterization usually removes monoglycerides containing palmitic or stearic fatty acid. The most common winterization method is cooling the mixture to a certain temperature and hold for certain time. Winterization efficiency is impacted by cooling speed and even varying the temperature will increase efficiency. A person skilled in the art will know how to optimize and run an efficient winterization to reach a system that does not crystallize at certain temperature. The crystallized material is then removed by filtration or other liquid solid separation methods.

The present invention also relates to a monoglyceride producible with the inventive method as described above. Said monoglyceride preferably has a MCPD content of less than 2.620 ppb, more preferably of less than 2.500 ppb, more preferably of less than 2.120 ppb, more preferably of less than 1.620 ppb, more preferably of less than 1.120 ppb, more preferably of less than 720 ppb and most preferably of less than 420 ppb.

Last not least, the present invention is also directed to the use of the inventive monoglyceride, e.g. as whipping agent or emulsifier, for the production of formulations used in food, pharmaceutical or animal nutrition, especially of a formulation for infant nutrition.

In the following, the present invention is depicted by means of a Inventive Examples and compared to an Comparative Example depicting the prior art method without intending to, thereby, limiting the scope of protection.

### Examples

### Comparative Example - one-step neutralization:

379.6 g of glycerol (99,5 % DAB Kosher; available from Cargill GmbH, Germany), 0.29 g of CaO (available from Magnesia GmbH, Germany), as catalyst, and 2.600 g of corn oil (Mazola Reines Keimöl; available from Peter Kölln GmbH & Co. KGaA Germany) were mixed, the latter having a 3-MCPD content of 261 ppb as determined by means of ISO 1863-2 mod. measured by SGS (Hamburg, Germany) (cf. Tab. 1 below). For the formation of monoglyceride, the mixture was then heated up to 250 °C and kept at this temperature for 60 minutes. To neutralize the CaO catalyst, 2.49 g of 23.4 wt. % phosphoric acid in glycerol (phosphoric acid with original concentration of 75 wt. %; available from Alventa S.A., Poland) were added to the mixture still having 250 °C.

Then, the mixture was cooled down to 85 °C and refining was performed to improve color and quality of the product. Finally, the dispersion was cooled down to 55 °C. Filtration was then performed at 55 °C to remove the refining aids. Subsequently, the 3-MCPD content was determined by means of ISO 1863-2 mod. measured by SGS (Hamburg, Germany) as being 2.140 ppb (cf. Tab. 1 below).

To remove unreacted glycerol, either a thin film evaporation was conducted or short path distillation at various temperatures. The results show that using the comparative method the MCPD could not be reduced enough. Even using thin film evaporation at 200 °C and pressure of 0,2-0,5 mbar the distillation loss was extremely high but the reduction of MCPD was insufficient (cf. Tab. 1 below).

### Inventive Example 1- two-step neutralization (1^{st} 30 % + 2^{nd} 70 % of acid):

379.6 g of glycerol (99,5 % DAB Kosher; available from Cargill GmbH, Germany), 0.29 g of CaO (available from Magnesia GmbH, Germany), as catalyst, and 2.600 g of corn oil (Mazola Reines Keimöl; available from Peter Kölln GmbH & Co. KGaA Germany) were mixed, the latter having a 3-MCPD content of 261 ppb as determined by means of ISO 1863-2 mod. measured by SGS (Hamburg, Germany) (cf. Tab. 1 below). For the formation of monoglyceride, the mixture was then heated up to 250 °C and kept at this temperature for 60 minutes. To neutralize the CaO catalyst, 0.75 g of 23.4 wt. % phosphoric acid in glycerol (phosphoric acid with original concentration of 75 wt. %; available from Alventa S.A., Poland) were added to the mixture still having 250 °C.

Then, the mixture was cooled down to 85 °C and refining was performed to improve color and quality of the product. Then, the mixture was cooled down to 55 °C and, to the cooled-down mixture, 1.74 g of 23.4 wt. % phosphoric acid in glycerol (phosphoric acid with original concentration of 75 wt. %; available from Alventa S.A., Poland) were added. Filtration was then performed at 55 °C to remove the refining aids. Subsequently, the 3-MCPD content was determined by means of ISO 1863-2 mod. measured by SGS (Hamburg, Germany) as being 2.060 ppb (cf. Tab. 1 below).

To remove unreacted glycerol, either a thin film evaporation was conducted or short path distillation at various temperatures. The results show that if the neutralization is performed in two-steps the 3-MCPD can be significantly lowered with distillation. Using only mild distillation temperatures with low amount of distillate loss we reduce the MCPD well below the regulatory limits of 750 ppb and using slightly higher distillation temperature reduces the MDPD further. The distillation method (thin film distillation vs. short path distillation) does not have strong impact on the MCPD but only the distillation conditions (temperature and pressure) are important (cf. Tab. 1 below).

### Inventive Example 2 - two-step neutralization (1^{st} 15 % + 2^{nd} 85 % of acid):

379.6 g of glycerol (99,5 % DAB Kosher, available from Cargill GmbH, Germany), 0.29 g of CaO (available from Magnesia GmbH, Germany), as catalyst, and 2.600 g of corn oil (Mazola Reines Keimöl; available from Peter Kölln GmbH & Co. KGaA Germany) were mixed, the latter having a 3-MCPD content of 261 ppb as determined by means of ISO 1863-2 mod. measured by SGS (Hamburg, Germany). For the formation of monoglyceride, the mixture was then heated up to 250 °C and kept at this temperature for 60 minutes. To neutralize the CaO catalyst, 0.37 g of 23.4 wt. % phosphoric acid in glycerol (phosphoric acid with original concentration of 75 wt. %; available from Alventa S.A., Poland) were added to the mixture still having 250 °C.

Then, the mixture was cooled down to 85 °C and refining was performed to improve color and quality of the product. Then, the mixture was cooled down to 55 °C and, to the cooled-down mixture, 2.12 g of 23.4 wt. % phosphoric acid in glycerol (phosphoric acid with original concentration of 75 wt. %; available from Alventa S.A., Poland) were added. Filtration was then performed at 55 °C to remove the refining aids. Subsequently, the 3-MCPD content was determined by means of ISO 1863-2 mod. measured by SGS (Hamburg, Germany) as being 1.690 ppb. After distillation using short path distillation at 180 °C and 0.5 mbar the 3-MCPD content was 260 ppb.

Inventive Example 3 - two-step neutralization (1^{st} 30 % + 2^{nd} 70 % of acid) with excess glycerol and phase separation: 759.2 g of glycerol (99,5 % DAB Kosher; available from Cargill GmbH, Germany), 0.29 g of CaO (available from Magnesia GmbH, Germany), as catalyst, and 2.600 g of corn oil (Mazola Reines Keimöl; available from Peter Kölln GmbH & Co. KGaA Germany) were mixed, the latter having a 3-MCPD content of 261 ppb as determined by means of ISO 1863-2 mod. measured by SGS (Hamburg, Germany). For the formation of monoglyceride, the mixture was then heated up to 250 °C and kept at this temperature for 60 minutes. To neutralize the CaO catalyst, 0.75 g of 23.4 wt. % phosphoric acid in glycerol (phosphoric acid with original concentration of 75 wt. %; available from Alventa S.A., Poland) were added to the mixture still having 250 °C.

Then the mixture was cooled down to 100 °C and kept for 60 minutes while glycerol phase separated out. The glycerol phase was then removed and the monoglyceride phase collected and cooled down to 85 °C.

Then refining was performed to improve color and quality of the product. Then, the mixture was cooled down to 55 °C and, to the cooled-down mixture, 1.74 g of 23.4 wt. % phosphoric acid in glycerol (phosphoric acid with original concentration of 75 wt. %; available from Alventa S.A., Poland) were added. Filtration was then performed at 55 °C to remove the refining aids. Subsequently, the 3-MCPD content was determined by means of ISO 1863-2 mod. measured by SGS (Hamburg, Germany) as being less than 100 ppb.

**Table 1: Comparison of 3-MCPD content depending on neutralization and distillation method.**

| | Comparative Example (one-step neutralization) | | Inventive Example 1 (two-step neutralization) |
|---|---|---|---|
| Description | 3-MCPD content in ppb | Distillate loss in w/w % | 3-MCPD content in ppb |
| Raw material | 261 | N/A | 261 |
| Before distillation | 2.140 | N/A | 2.060 |
| Thin film evaporation 170 °C, 0.2-0.5 mbar | 1.180 | 4,3 | 330 |
| Thin film evaporation 180 °C, 0.2-0.5 mbar | 1.040 | 8,3 | 300 |
| Thin film evaporation 200 °C, 0.2-0.5 mbar | 600 | 23,1 | 240 |
| Short path distillation 180 °C, 0.5 mbar | 1.180 | 7,6 | 310 |
| Short path distillation 200 °C, 0.5 mbar | 920 | 16,8 | 250 |

### Discussion:

As for the Comparative Example, the 3-MCPD content was significantly increased during monoglyceride production (from 261 to 2.140 ppb, i.e. 820 % increase). Thin film evaporation could then reduce the 3-MCPD content from 2.140 ppb to 1.180, 1.040 and 600 ppb at 170 °C, 180 °C and 200 °C, respectively (all trials were performed at 0.2-0.5 mbar). This is 45 %, 51 % and 72 % reduction in 3-MCPD, respectively. However, the strongest reduction using 200 °C distillation temperature came at a very high cost of high distillate loss, i.e. 23 %. Furthermore, 600 ppb 3-MCPD is not low enough because the process must be able to handle raw material fluctuation and being just below the regulatory limit of 750 ppb is simply too risky. Results using short path distillation gave similar results except the losses were a little lower and also the 3-MCPD reductions were a little lower. This is simply because the pressure was slightly higher, i.e. 0.5 mbar instead of 0.2-0.5 mbar. This shows the impact of pressure but also that using different distillation techniques will result in similar results if there is similar ratio of distillate to rest.

However, if the two-step method from Inventive Example 1 (30 % neutralization at 250 °C and 70 % at 55 °C) is used, a similar amount of 3-MCPD, i.e. 2.060 ppb, is obtained. However, with this method the 3-MCPD could be removed much easier using distillation. This might be based on the surprisingly much higher ratio of free 3-MCPD which can be removed much easier using distillation. Thin film evaporation could reduce 3-MCPD from 2.060 ppb to 330, 300, and 240 ppb at 170 °C, 180 °C and 200°C, respectively (all trials were performed at 0.2-0.5 mbar). This is 84 %, 85 % and 88 % reduction, respectively. When taking into consideration that the 3-MCPD in the raw material was very likely 3-MCPD ester and therefore it likely would remain in the end-product, i.e. in the monoglyceride, the real reduction is even higher. With 200 °C distillation (short path and thin film distillation) the same 3-MCPD content as in the raw material was reached. However, such reductions are accompanied by heavy losses. The results show very clearly that by controlling the neutralization process almost all increases in 3-MCPD during the production of monoglyceride can be prevented.

In Inventive Example 2, the neutralization ratio was even further shifted performing only 15 % neutralization at 250 °C and 85 % at 55 °C. This resulted firstly in slightly lower formation of 3-MCPD in the reaction (1.690 ppb) and secondly, after thin film evaporation at 180 °C and 0.2-0.5 mbar, only 260 ppb were found. This indicates that the same 3-MCPD content as is present in the raw material can be reach even at milder distillation temperature than in Inventive Example 1. This allows to reach the lower levels without strong losses during distillation.

Finally, the glycerol content in the recipe was in increased (cf. Inventive Example 3). This is common, when the goal is to make highly concentrated monoglyceride. Surprisingly, when the two-step neutralization was combined with increased glycerol content, it was found that there was no measurable 3-MCPD in the mixture before distillation. Phase separation needs to be performed to remove excess glycerol, when higher glycerol amounts are used and, therefore, it is expected that the free 3-MCPD is extracted into the glycerol phase. Only a combination of two-step neutralization and excess glycerol followed by phase separation will result in these low values of less than 100 ppb 3-MCPD. Surprisingly, it also means that even the MCPD ester present in the raw material can be removed. Reduction below the values from raw materials using industry relevant techniques has never been seen before.

## Claims

1. Method for the production of a monoglyceride **characterized in that** the method comprises the following subsequent steps:
i) glycerol is mixed with at least one base and at least one triglyceride and/or at least one fatty acid,
ii) the resulting mixture is heated up to a temperature in the range of from 200 to 300 °C and held in said range for 1 to 180 minutes to form at least one monoglyceride,
iii) a first portion of at least one acid is added to the heated-up mixture,
iv) the mixture is cooled down to a temperature in the range of from 20 to 170 °C, if applicable, any excess glycerol is separated out using phase separation, and
v) a second portion of at least one acid is added to the cooled-down mixture to completely neutralize the at least one base.

2. Method according to claim 1 **characterized in that** the at least one triglyceride in step i) is at least one vegetable oil or animal fat, preferably at least one vegetable oil or animal fat selected from the group consisting of corn oil, sunflower oil, canola oil, palm oil, palm kernel oil, safflower oil, coconut oil, olive oil and beef tallow, and most preferably corn oil, or that, respectively, the at least one fatty acid is originating from at least one of these vegetable oils or animal fats.

3. Method according to claim 1 or 2 **characterized in that** the glycerol content in the mixture of step i) is at least 13 wt. %, preferably at least 16 wt. %, more preferably at least 19 wt. % and most preferably at least 22 wt. %.

4. Method according to one of the preceding claims **characterized in that** the at least one base in step i) is at least one inorganic base, preferably at least one inorganic base selected from the group consisting of sodium hydroxide, sodium carbonate, sodium acetate, potassium hydroxide, potassium carbonate, calcium oxide, calcium hydroxide, magnesium oxide and lithium hydroxide, and is most preferably calcium oxide.

5. Method according to one of the preceding claims **characterized in that**, in step ii), the resulting mixture is heated up to a temperature in the range of from 245 to 285 °C and is held in said range for 5 to 90 minutes.

6. Method according to one of the preceding claims **characterized in that** the at least one acid in step iii) is at least one acid selected from the group consisting of acetic acid, lactic acid, citric acid, sulfuric acid, hydrochloric acid and phosphoric acid, and is most preferably phosphoric acid.

7. Method according to one of the preceding claims **characterized in that** the % dosage in step iii) of the at least one acid, preferably being phosphoric acid, is in the range of from 0 to 50 mol %, preferably of from 10 to 40 mol %, more preferably of from 12.5 to 35 mol %, more preferably of from 12.5 to 27.5 mol % and most preferably of from 12.5 to 17.5 mol % of the total acid added in steps iii) and v).

8. Method according to one of the preceding claims **characterized in that**, in step iv), the mixture is cooled down to a temperature in the range of from 30 to 120 °C and preferably of from 30 to 100 °C or, respectively, if excess glycerol separates out physically and a phase separation is performed, down to a temperature in the range of from 80 to 170 °C.

9. Method according to one of the preceding claims **characterized in that**, after step iv), the mixture is refined to reduce color, heavy metals and/or other contaminants and/or improve filtration, using refining aids such as bleaching earth and/or activated carbon and/or amorphous silica gel and/or filtration aids, wherein the refining aids are added at 60 to 120 °C and then the dispersion is mixed for 30 to 120 minutes.

10. Method according to one of the preceding claims **characterized in that** the at least one acid in step v) is at least one acid selected from the group consisting of acetic acid, lactic acid, citric acid, sulfuric acid, hydrochloric acid and phosphoric acid, and is most preferably phosphoric acid.

11. Method according to one of the preceding claims **characterized in that** in steps iii) and v) the same at least one acid is used.

12. Method according to one of the preceding claims **characterized in that** the % dosage in step v) of the at least one acid, preferably being phosphoric acid, is in the range of from 50 to 100 mol %, preferably of from 60 to 90 mol %, more preferably of from 65 to 87.5 mol %, more preferably of from 72.5 to 87.5 mol % and most preferably of from 82.5 to 87.5 mol % of the total acid added in steps iii) and v).

13. Method according to one of the preceding claims **characterized in that** the molar ratio of the total amount of acid added in steps iii) and v), preferably being phosphoric acid, and the at least one base added in step i), preferably being calcium oxide, is in the range of from 0.4 to 1.5, more preferably of from 0.5 to 1.2 and most preferably of from 0.6 to 1.1 calculated as phosphoric acid to calcium oxide.

14. Method according to one of the preceding claims **characterized in that** the mixture is, preferably after step v), subjected to at least one liquid-solid separation step, preferably being at least one filtration step.

15. Method according to one of the preceding claims **characterized in that** a step vi) is conducted, in which the mixture is subjected to a distillation at a temperature in the range of from 150 to 230 °C and a pressure in the range of from 0.1 to 5.0 mbar to distill off unreacted glycerol and free MCPD.

16. Method according to one of the preceding claims **characterized in that** a step vii) is conducted, in which the monoglyceride obtained in step v) or vi), respectively, is distilled off using short path distillation at 170 to 230 °C and a pressure in the range of from 0.005 to 0.5 mbar.

17. Monoglyceride producible with the method according to one of the preceding claims.

18. Use of the monoglyceride according to claim 17 for the production of a formulations used in food, pharmaceutical or animal nutrition.
